# EUROPEAN PATENT SPECIFICATION

(11) **EP 3 190 658 B1**
(45) Date of publication and mention of the grant of the patent: **14.11.2018**
(21) Application number: 15837521.2
(22) Date of filing: 01.09.2015
(51) Int. Cl.: H01Q 1/32, H01Q 1/22, H01Q 1/40, B62J 99/00, B62J 1/00, B62J 1/28, H04B 1/3822

(54) **SADDLED VEHICLE**
SATTELFAHRZEUG
VÉHICULE À SELLE

(30) Priority: 04.09.2014 JP 2014180323
(43) Date of publication of application: 12.07.2017
(73) Proprietor: Yamaha Hatsudoki Kabushiki Kaisha, Iwata-shi, Shizuoka 438-8501 (JP)
(72) Inventor: HASHIMOTO, Yasushi, Iwata-shi Shizuoka 438-8501 (JP)
(74) Representative: Zimmermann, Tankred Klaus
(86) International application number: PCT/JP2015/074892
(87) International publication number: WO 2016/035797

(56) References cited:
- EP-A1- 2 180 545
- JP-A- 2004 116 261
- JP-A- 2006 103 639
- JP-A- 2006 103 639
- JP-A- 2006 182 065
- JP-A- 2008 114 654
- JP-A- 2008 114 654
- JP-A- 2011 207 360
- US-A- 4 658 266
- US-A1- 2006 224 344

## Description

### Technical Field

The present invention relates to a straddled vehicle. More particularly, the present invention is directed to an antenna disposition structure.

### Technical Field

In recent years, a straddled vehicle for communication defined in an ASV (advanced safety vehicle) with use of IT (Information Technology) has been developed as part of an advanced road traffic system. Such a straddled vehicle allows road-vehicle communication with roadside communicator and vehicle-to-vehicle communication with vehicles. Example of the above type vehicle include one having an antenna disposed on a front side of a two-wheeled motor vehicle as the straddled vehicle for communication with a front vehicle or roadside communicator. See, for example, Patent Literature 1.

### Technique of Patent Literature 1

Patent Literature 1 discloses a two-wheeled motor vehicle having an antenna with forward directivity of the two-wheeled motor vehicle disposed forward from a slant line connecting the center of a handle bar and an axle of a front wheel. This allows communication with another vehicle in front of the two-wheeled motor vehicle. In addition, another antenna with upward directivity of the two-wheeled motor vehicle is disposed forward from the antenna with the forward directivity. This allows usage of the GPS (Global Positioning System).

Patent Literature 1: Japanese Patent Publication No. 4156783B

### Summary of Invention

### Technical Problem

However, the currently-used example with the above configuration possesses the following drawbacks. Specifically, the antenna with the forward directivity may cause reduction in transmitting and receiving distance in a transverse direction and a backward direction. The two-wheeled motor vehicle includes in a front part thereof a metal configuration such as handle bar and a head tube. As a result, even disposition of an antenna with no directivity in the same position instead of the antenna with the directivity causes the metal configuration to affect electromagnetic waves transmitted from the antenna, leading to reduction in transmitting and receiving distance to a vehicle behind the two-wheeled motor vehicle.

Moreover, the disposition of the non-directional antenna on a surface of the vehicle body in an erect posture may cause some damage such as bending of the antenna by tamper or a driver's body or baggage.

Further examples of antennas and vehicles including antennas are given in JP 2011-207360 A, JP 2008-114654 A, US 2006/224344 A1, JP 2004-116261 A JP 2006-103639 A, EP 2 180 545 A1, and US 4,658,266 A.

The present invention has been made regarding the state of the art noted above, and its one object is to provide a straddled vehicle that allows suitable road-vehicle communication and vehicle-to-vehicle communication omnidirectionally while preventing damage to an antenna.

### Solution to Problem

The present invention is constituted as stated below to achieve the above object. One aspect according to claim 1 of the present invention provides a straddled vehicle comprising a non-directional antenna that performs road-vehicle communication with roadside communicator and vehicle-to-vehicle communication with a front vehicle and a rear vehicle. The straddled vehicle includes a seat made of a cushioning material, a seat frame that holds the seat, and the non-directional antenna is disposed backward of a front end of the seat and above the seat frame. The antenna is covered with the cushioning material of the seat.

Since the antenna is covered with the cushioning material and thus is not exposed, the above configuration of the aspect achieves tamper protection even when the non-directional antenna is disposed on the straddled vehicle in an erected attitude, and thus prevents damage to the antenna, such as bending of the antenna caused by a driver's body or baggage. In addition, since the antenna is disposed above the seat frame, suitable communication is performable without affecting the electromagnetic waves transmitted/received to/from the antenna by the vehicle body. When the antenna is disposed on a front upper part of the straddled vehicle, the antenna is moved within sight of the driver to make driving more difficult. In contrast to this, the antenna of the aspect of the present invention is disposed backward of the front end of the seat and above the seat frame, and thus is disposed backward of the driver on the seat. This prevents any obstructions to driving.

Moreover, since the antenna is non-directional, omnidirectional communication is performable. Accordingly, the aspect is suitable to both the road-vehicle communication and the vehicle-to-vehicle communication. Such omnidirectional communication needs a single antenna, leading to enhanced reduction in cost and space.

Moreover, the antenna is covered with the cushioning material of the seat. That is, disposition of the non-directional antenna within the seat needs no additional space for the antenna, leading to reduction in space.

Moreover, it is preferred in the aspect of the present invention that the seat includes a straddled seat part and a back rest part, and that the cushioning material corresponds to a cushioning material of the back rest part. Here, the non-directional antenna is disposed within the back rest part. This requires no external space for the antenna, leading to reduction in space. In addition, the antenna may be provided above the seat part, achieving more suitable communication.

Moreover, it is preferred that the aspect of the present invention further includes a passenger grip fixed on the seat frame, and that the antenna is disposed above the passenger grip. The antenna disposed above the passenger grip fixed on the seat frame allows prevention of influences by the passenger grip on the electromagnetic waves transmitted/received to/from the antenna.

Moreover, it is preferred that the antenna has a frequency band of 760 MHz. The antenna with the frequency band of 760 MHz achieves reduced influences on the electromagnetic waves transmitted/received to/from the antenna by the driver or a pillion passenger and achieves a sufficient amount of information transmitted and received.

Moreover, it is preferred that the antenna is any of a monopole antenna, a whip antenna, a collinear antenna, and a Brown antenna. Since the non-directional antenna is any of the monopole antenna, the whip antenna, the collinear antenna, and the Brown antenna, road-vehicle communication and vehicle-to-vehicle communication are suitably performable.

### Advantageous Effects of Invention

The straddled vehicle with the aspect of the present invention allows suitable performance of road-vehicle communication and vehicle-to-vehicle communication omnidirectionally while avoiding damage to the antenna.

### Brief Description of Drawings

Fig. 1 is a side view of a two-wheeled motor vehicle according to a first embodiment of the present invention.
Fig. 2 is a plan view of the two-wheeled motor vehicle according to the first embodiment.
Figs. 3 and 4 each illustrate an antenna according to the first embodiment.
Fig. 5 illustrates a radiation condition of electromagnetic waves from a currently-used two-wheeled motor vehicle.
Fig. 6 illustrates a radiation condition of electromagnetic waves from the two-wheeled motor vehicle according to the first embodiment.
Fig. 7 is a graph illustrating a relative dielectric constant and a dielectric loss angle of water relative to frequency.
Fig. 8 illustrates diffraction of the electromagnetic waves from the antenna.
Fig. 9 is a side view of a two-wheeled motor vehicle according to a second embodiment of the present invention.

### Embodiment 1

The following describes a first embodiment (Embodiment 1) of the present invention with reference to drawings. In the following description, a two-wheeled motor vehicle of a scooter type is described as one example of a straddled vehicle. The following description includes terms forward/backward and right/left based on a traveling direction of the two-wheeled motor vehicle.

### 1. Outline Construction of Two-Wheeled Motor Vehicle

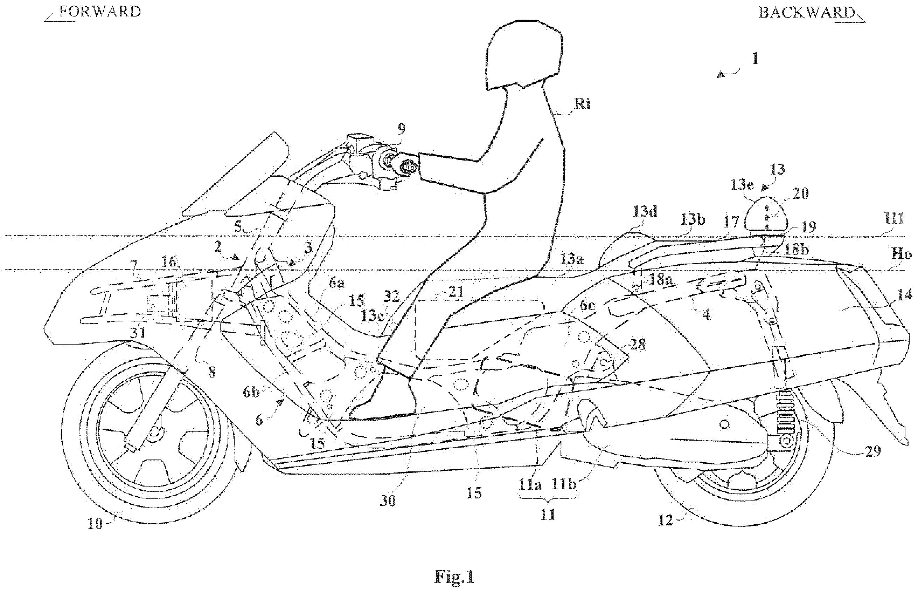

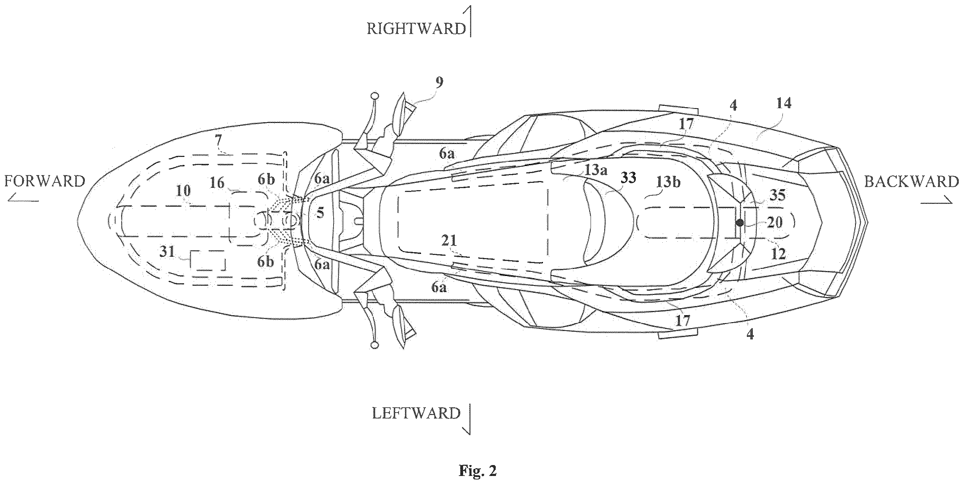

Reference is made to Figs. 1 and 2. Fig. 1 is a side view of an outline construction of a two-wheeled motor vehicle 1 in Embodiment 1. Fig. 2 is a plan view of the outline construction of the two-wheeled motor vehicle 1. The two-wheeled motor vehicle 1 includes a vehicle body frame 2 of a so-called underbone type. The vehicle body frame 2 includes a main frame 3 and a seat frame 4. The main frame 3 is composed of a head tube 5, a frame main body 6, and a front frame 7. Here, the main frame 3 need not include the front frame 7 depending on types of the two-wheeled motor vehicle 1. The vehicle body frame 2 is covered with a vehicle body cover 14 made of resin.

The head tube 5 supports a front fork 8 via a steering shaft, not shown, such that the front fork 8 is swingable rightward/leftward. That is, the steering shaft fixed on the upper end of the front fork 8 is inserted into the head tube 5, whereby the front fork 8 is swingable rightward/leftward. A handle 9 is connected to an upper part of the steering shaft. Operating the handle 9 causes the front fork 8 to swing. A front wheel 10 is rotatably attached to a lower end of the front fork 8.

An engine unit 11 is attached in a rear part of the main frame body 6. The engine unit 11 is a known unit swing-type engine that is composed of an engine 11a and a transmission case 11b extending leftward of a rear wheel 12 from the engine 11a. The engine 11a and the transmission case 11b are integrally suspended on the vehicle body so as to swing vertically. The transmission case 11b accommodates a transmission mechanism that transmits rotation of the engine to the rear wheel 12. A rear wheel output shaft, not shown, is disposed in a rear part of the transmission case 11b. The rear wheel 12 is connected to the rear wheel output shaft. A seat 13 is disposed above the engine 11a.

A vehicle body cover 14 that is disposed between the engine unit 11 and the seat 13 in plan view extends backward and above the engine unit 11 in side view. The rear wheel 12 is disposed below the vehicle body cover 14. A rear part of the engine unit 11 is exposed externally. A fuel tank 30 is disposed forward of the engine 11a.

The frame main body 6 includes an upper frame 6a, a lower frame 6b, and a connection bracket 6c to which rear ends of the upper and lower frames 6a and 6b are connected. The upper frame 6a is composed of paired right and left upper frame portions, and the portions are welded on the middle side surface in the vertical direction of the head tube 5, from which the portions extend backward apart from each other rightward and leftward. In addition, the lower frame 6b is composed of paired right and left lower frame portions, and the portions are welded on the lower side surface of the head tube 5, from which the portions extend backward below the upper frames 6a apart from each other rightward and leftward. The lower frame 6b extends upward on the rear portion thereof, and the rear end thereof is welded on the connection bracket 6c. The rear end of the upper frame 6a is welded on the connection bracket 6c. The front end of the seat frame 4 is welded on the connection bracket 6c. Here, Fig. 2 partially illustrates the upper frame 6a in an abbreviated manner by break lines. In addition, the lower frame 6b overlaps the upper frame 6a in plan view, and accordingly, a portion of the lower frame 6b in backward from the handle 9 is illustrated in an abbreviated manner.

A reinforcing board (gazette) 15 is suspended dispersedly and is welded at a plurality of positions between the upper frame 6a and the lower frame 6b in the forward/backward direction. The reinforcing board 15 is made of metal, and reinforces rigidity of the upper frame 6a and the lower frame 6b. A pivot shaft 28 is disposed in a rear part of the connection bracket 6c for holding the engine unit 11 so as to swing vertically. A rear cushion unit 29 is disposed between the rear portion of the seat frame 4 and the transmission case 11b for cushion of swinging of the engine unit 11.

The front frame 7 extends forward from the head tube 5 and the lower frame 6b. A battery 16 is accommodated within the front frame 7. An ECU 31 is disposed forward of the battery 16 in the front frame 7.

A housing 21 is disposed above the fuel tank 30 and the engine 11a. The housing 21 allows accommodation of a helmet and the like. The seat 13 is disposed above the housing 21 and the seat frame 4.

The seat 13 is composed of a front seat part 13a on which the driver sits, a rear seat part 13b on which a pillion passenger sits, and a front back rest part 13d and a rear back rest part 13e corresponding to the front seat part 13a and the rear seat part 13b, respectively. The front seat part 13a and the rear seat part 13b are integrally formed in a saddle riding form. The front seat part 13a and the rear seat part 13b are able to rotate about a hinge 32. The driver allows access to the housing 21 when the front seat part 13a and the rear seat part 13b are open. The rear seat part 13b is disposed backward of the front seat part 13a. The front back rest part 13d is disposed between the front seat part 13a and the rear seat part 13b. The front back rest part 13d is used for a driver's waist pad. The front seat part 13a and the rear seat part 13b are not necessarily formed integrally, but may be formed separately.

A passenger grip 17 surrounds a lateral side of the rear seat part 13b. A front part of the passenger grip 17 is attached to a front upper end of the seat frame 4 via the bracket 18a. A rear part of the passenger grip 17 is attached to a rear upper end of the seat frame 4 via the bracket 18b. The passenger grip 17 is made of metal. The pillion passenger grips the passenger grip 17, whereby an attitude of the pillion passenger is able to be kept stable during riding.

The rear back rest part 13e is disposed backward of the rear seat part 13b, and is used as a pillion passenger's waist pad. The rear back rest part 13e is attached to an upper part of the passenger grip 17 via a plate 19. The front seat part 13a, the rear seat part 13b, the front back rest part 13d, and the rear back rest part 13e are each made of a cushioning material such as polyurethane foams. An exterior of the cushioning material is covered with leather, artificial leather, synthetic leather, and the like.

A single antenna 20 is disposed within the rear back rest part 13e. The antenna 20 is covered with the cushioning material of the rear back rest part 13e. It is preferred that the cushioning material is hard to prevent deformation of the antenna under application of load from the pillion passenger. The antenna 20 is held with the plate 19. The plate 19 is attached to the passenger grip 17. Using the antenna 20 allows the two-wheeled motor vehicle 1 to perform road-vehicle communication with roadside communicator and vehicle-to-vehicle communication with other vehicles.

The antenna 20 is disposed within the rear back rest part 13e, and thus is disposed at a level higher than a level Ho of the upper end of the seat frame 4. Moreover, the antenna 20 is disposed at a level higher than a level HI of the upper end of the passenger grip 17.

### 2. Configuration of Antenna

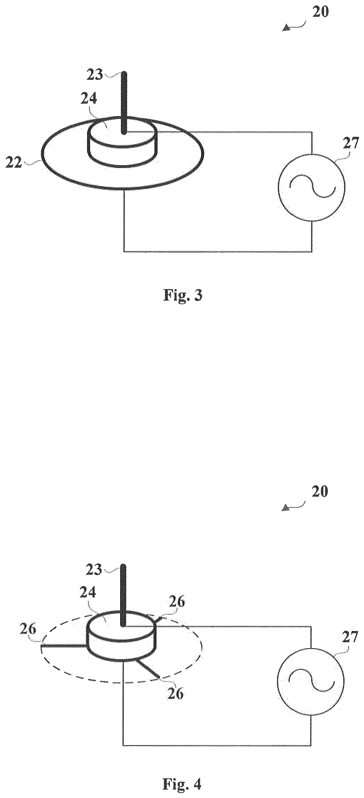

The following describes a configuration of the antenna in the two-wheeled motor vehicle 1 with reference to Figs. 3 and 4. Figs. 3 and 4 each illustrate the configuration of the antenna.

The antenna 20 is a non-directional linear antenna. Examples of the non-directional linear antenna include a monopole antenna, whip antenna, a collinear antenna, and a Brown antenna. In Embodiment 1, a Brown antenna is adopted. The antenna 20 includes a ground plane 22, a conductor rod 23, and an insulation member 24. The insulation member 24 is disposed between the ground plane 22 and the conductor rod 23. A power supply unit 27 supplies power to the ground plane 22 and the conductor rod 23.

The ground plane 22 is in a disk shape. Alternatively, instead of the disk ground plane 22, three or more metal wires 26 extending radially on a plane may be adopted. See Figure 4. The conductor rod 23 is a radiation conductor erected upward from the insulation member 24. The insulation member 24 is a plate made of a fluorine resin. The insulation member 24 may be made of other materials such as plastic, or may be formed by other insulating members. The power supply unit 27 supplies high-frequency power to the ground plane 22 or the metal wires 26 and the conductor rod 23.

It is preferred that one third or less of the conductor rod 23 at a lower length overlaps the passenger grip 17 of the two-wheeled motor vehicle 1 in side view, and it is more preferred that no portion of the conductor rod 23 overlaps the passenger grip 17.

### 3. Property of Antenna

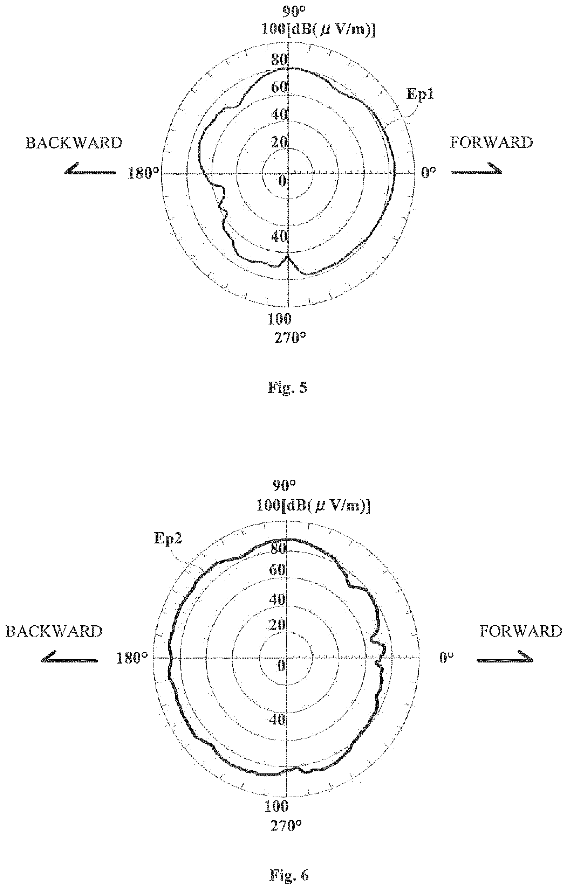

The following describes properties of the currently-used antenna and the antenna in Embodiment 1 with reference to Figs. 5 and 6. Fig. 5 illustrates an antenna property when the non-directional antenna is disposed on a front side of the vehicle body. Fig. 6 illustrates an antenna property with antenna disposition of Embodiment 1. Here, a direction is set under assumption that a front way of the two-wheeled motor vehicle 1 corresponds to 0 degree, a left way corresponds to 90 degrees, a back way corresponds to 180 degrees, and a right way corresponds to 270 degrees.

As illustrated in Fig. 5, an emission pattern Ep1 when the non-directional antenna is disposed in a front part of the vehicle body forward of the handle 9 has a lowered property of backward emission under influences of reflection by a metal structure such as the head tube 5 and the handle 9, leading to a shortened communication distance for backward communication. Referring to Fig. 5 reveals that emission intensity falls below 60dB especially in a way of 190 to 210 degrees.

In contrast to this, the antenna disposition of Embodiment 1 achieves an emission pattern Ep2 illustrated in Fig. 6. The emission pattern Ep2 has emission intensity not below 60dB omnidirectionally, and an omnidirectional average intensity higher than that of the emission pattern Ep1.

In addition, a frequency band of 760 MHz is used for radio communication of the antenna 20 in Embodiment 1. Here, the 760MHz band corresponds to one whose center frequency is 760MHz and whose band width is 10MHz. That is, the 760MHz band ranges from 755MHz to 765MHz. Using the frequency band of 760MHz achieves reduction in value of a dielectric loss angle (tan *δ*) by the driver and the pillion passenger relative to a frequency band higher than that (e.g., a value of a dielectric loss angle at a frequency band of 5800 MHz). This allows suppressed reduction in electric field intensity when electromagnetic waves pass through a human body.

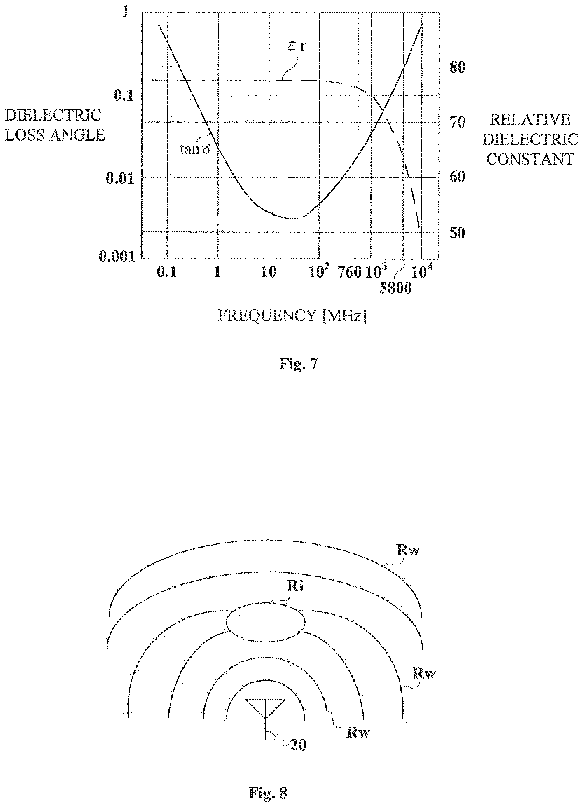

Reference is made to Fig. 7. Fig. 7 is a graph illustrating a relative dielectric constant (εr) and a dielectric loss angle (tan *δ*) of water relative to a frequency. It is assumed that the driver and the pillion passenger are composed of water. A frequency band with the smallest dielectric loss angle (tan *δ*) ranges from 10 to 100 MHz, the frequency band causing a small amount of information transmitted. Then, a frequency band of 100 to 1000 MHz obtains a sufficient amount of information for the road-vehicle communication and the vehicle-to-vehicle communication while increase in dielectric loss angle (tan *δ*) is suppressed to some extent. A frequency band of 1000 MHz or more decreases the relative dielectric constant (εr), but increases the dielectric loss angle (tan *δ*) and the frequency to cause significant reduction in electric field intensity when the electromagnetic waves pass through the human body. A frequency band of 760 MHz with a long wavelength causes a large diffraction angle (an angle at which the waves rounds behind an obstacle). Accordingly, as illustrated in Fig. 8, electromagnetic waves Rw from the antenna 20 round an driver Ri through diffraction to propagate forward of the driver Ri. In addition, although not shown, the antenna 20 receives electromagnetic waves from forward. Consequently, this allows vehicle-to-vehicle communication and road-vehicle communication with the antenna 20 and an object in front of the antenna regardless of presence or absence of the driver Ri.

With the configuration of Embodiment 1, even when the non-directional antenna 20 is disposed on the two-wheeled motor vehicle 1 in an erected attitude, the antenna 20 is covered with the cushioning material of the rear back rest part 13e and thus is not exposed. This achieves tamper protection of the antenna 20. Moreover, this prevents damage to the antenna 20 such as by bending.

Moreover, the antenna 20 is disposed above the seat frame 4. Accordingly, suitable communication is performable with no influence of the electromagnetic waves transmitted/received to/from the antenna 20 by the vehicle body. When the antenna 20 is disposed on a front upper part of the two-wheeled motor vehicle 1, the antenna 20 is moved within sight of the driver to prevent driving. In contrast to this, the antenna 20 of Embodiment 1 is disposed backward of the front end 13c of the front seat part 13a and above the seat frame 4, and thus is disposed backward of the driver on the seat 13. This prevents no driving.

Moreover, since the antenna 20 is non-directional, omnidirectional communication is performable. Accordingly, the embodiment is suitable to both the road-vehicle communication and the vehicle-to-vehicle communication. Such omnidirectional communication achieves a single antenna 20, leading to enhanced reduction in cost and space. Moreover, disposition of the non-directional antenna 20 within the rear back rest part 13e needs no external space for the antenna 20, leading to reduction in space. In addition, the antenna 20 is may be provided above the front seat part 13a and the rear seat part 13b, achieving more suitable communication.

Moreover, the antenna 20 that is disposed above the passenger grip 17 fixed on the seat frame 4 allows suitable communication with no influence of the electromagnetic waves transmitted/received to/from the antenna 20 by the passenger grip 17. In addition, the antenna 20 with the frequency band of 760 MHz achieves reduced influences by the driver or the pillion passenger to the electromagnetic waves transmitted/received to/from the antenna 20 and obtains a sufficient amount of information to be transmitted/received.

Moreover, since the non-directional antenna 20 is any of the monopole antenna, the whip antenna, the collinear antenna, and the Brown antenna, road-vehicle communication and vehicle-to-vehicle communication are suitably performable.

### Embodiment 2

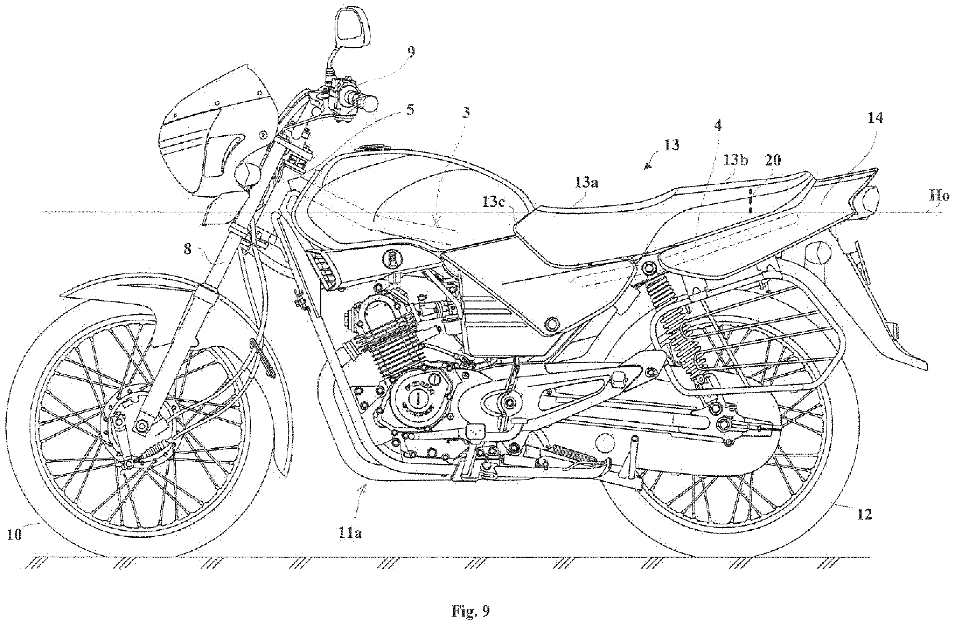

The following describes a two-wheeled motor vehicle of a second embodiment (Embodiment 2) with reference to Fig. 9. Fig. 9 is a side view of a two-wheeled motor vehicle with antenna disposition of Embodiment 2. In Embodiment 2, the elements denoted by the same reference numerals as in Embodiment 1 have common functions to the elements in Embodiment 1, and thus the description thereof is to be omitted. In addition, the configuration of the antenna other than the following is common to that in Embodiment 1.

Embodiment 2 has the characteristic in that the antenna 20 is disposed not within the back rest part but within the seat part. In Embodiment 1, the antenna 20 is disposed within the rear back rest part 13e. In contrast to this, since Embodiment 2 provides a naked-type two-wheeled motor vehicle without any back rest, the antenna 20 is disposed within the seat part. Here, the naked-type corresponds to a two-wheeled motor vehicle with an exposed engine or frame. In addition, the naked-type two-wheeled motor vehicle includes no passenger grip.

The seat 13 of Embodiment 2 includes a front seat part 13a and a rear seat part 13b. When the antenna 20 is disposed within the seat part of the seat 13, the antenna 20 is preferably disposed in rear part of the rear seat part 13b, but may be disposed in rear part of the front seat part 13a. Here, the antenna 20 is disposed backward of the front end 13c of the front seat part 13a. Accordingly, the antenna 20 is spaced away from the handle 9 by a sufficient gap. This allows propagation of electromagnetic waves from the antenna 20 forward of the handle 9 and the head tube 5 through diffraction. It is preferred that one third or less of the conductor rod 23 of the antenna 20 at its lower part overlaps the seat frame 4 of the two-wheeled motor vehicle 1 in side view, and it is more preferred that no portion of the conductor rod 23 overlaps the seat frame 4.

According to this embodiment, besides the same effect as of foregoing Embodiment 1, disposition of the non-directional antenna 20 within the seat part needs no external space for the antenna 20, leading to reduction in space.

The present invention is not limited to the above embodiments, but may be modified as follows:
(1) In the above embodiments, the two-wheeled motor vehicle 1 of a scooter type or a motorcycle type has been described as one example of the straddled vehicle. However, the invention is not limited to this embodiment only. That is, a two-wheeled motor vehicle of another type, a three-wheeled motor vehicle of a straddled type, and a four-wheeled motor vehicle of a straddled type are also applicable.
(2) In the above embodiments, the antenna 20 is disposed at substantially the middle transversely of the vehicle in plan view. However, in the present invention, the antenna 20 may be disposed rightward/leftward from the middle transversely of the vehicle as long as the antenna 20 is disposed in the cushioning material.
(3) In the above embodiments, the antenna 20 is a rod antenna. However, this is not limiting. A monopole antenna with a printed circuit board, or an inverted F or inverted L antenna with a printed circuit board is likewise applicable.

### Reference Signs List

- 1: two-wheeled motor vehicle
- 4: seat frame
- 13: seat
- 13e: rear back rest part
- 17: passenger grip
- 20: antenna

## Claims

1. A straddled vehicle (1) comprising:
a seat (13) made of a cushioning material;
a seat frame (4) configured to hold the seat (13); and
a non-directional antenna (20) disposed backward of a front end (13c) of the seat (13) and above the seat frame (4), the antenna (20) being covered with the cushioning material of the seat (13), wherein the antenna is configured to perform a road-vehicle communication with a roadside communicator and a vehicle-to-vehicle communication with a front vehicle and a rear vehicle.

2. The straddled vehicle (1) according to claim 1, wherein
the seat (13) comprises a straddled seat part (13a) and a back rest part (13e); and
the cushioning material corresponds to a cushioning material of the back rest part (13e).

3. The straddled vehicle (1) according to claim 1 or 2, further comprising:
a passenger grip (17) fixed on the seat frame (4), wherein
the antenna (20) is disposed above the passenger grip (17).

4. The straddled vehicle (1) according to any one of claims 1 to 3, wherein
the antenna (20) is configured to operate in a frequency band having a center frequency of 760 MHz.

5. The straddled vehicle (1) according to any one of claims 1 to 4, wherein
the antenna (20) is any of a monopole antenna, a whip antenna, a collinear antenna, and a Brown antenna.

## Patentansprüche

1. Ein Grätschsitzfahrzeug (1), das folgende Merkmale aufweist:
einen Sitz (13), der aus einem Polstermaterial hergestellt ist;
einen Sitzrahmen (4), der ausgebildet ist, um den Sitz (13) zu halten; und
eine nicht richtende Antenne (20), die hinter einem vorderen Ende (13c) des Sitzes (13) und über dem Sitzrahmen (4) angeordnet ist, wobei die Antenne (20) mit dem Polstermaterial des Sitzes (13) bedeckt ist, wobei die Antenne ausgebildet ist, um eine Straße-Fahrzeug-Kommunikation mit einem Fahrbahnrandkommunikator und eine Fahrzeug-Fahrzeug-Kommunikation mit einem vorderen Fahrzeug und einem hinteren Fahrzeug durchzuführen.

2. Das Grätschsitzfahrzeug (1) gemäß Anspruch 1, bei dem
der Sitz (13) ein Grätschsitzteil (13a) und ein Rückenlehnenteil (13e) aufweist; und
das Polstermaterial einem Polstermaterial des Rückenlehnenteils (13e) entspricht.

3. Das Grätschsitzfahrzeug (1) gemäß Anspruch 1 oder 2, das ferner folgende Merkmale aufweist:
einen Beifahrergriff (17), der an dem Sitzrahmen (4) fixiert ist, wobei
die Antenne (20) über dem Beifahrergriff (17) angeordnet ist.

4. Das Grätschsitzfahrzeug (1) gemäß einem der Ansprüche 1 bis 3, bei dem die Antenne (20) ausgebildet ist, um in einem Frequenzband mit einer Mittenfrequenz von 760 MHz zu arbeiten.

5. Das Grätschsitzfahrzeug (1) gemäß einem der Ansprüche 1 bis 4, bei dem die Antenne (20) eine einer Monopolantenne, einer Peitschenantenne, einer kollinearen Antenne und einer Brownschen Antenne ist.

## Revendications

1. Véhicule à selle (1), comprenant:
un siège (13) réalisé en un matériau de rembourrage;
un châssis de siège (4) configuré pour maintenir le siège (13); et
une antenne non directionnelle (20) disposée à l'arrière d'une extrémité avant (13c) du siège (13) et au-dessus du châssis de siège (4), l'antenne (20) étant recouverte du matériau de rembourrage du siège (13),
dans lequel l'antenne est configurée pour effectuer une communication route-véhicule avec un communicateur routier et une communication de véhicule à véhicule avec un véhicule avant et un véhicule arrière.

2. Véhicule à selle (1) selon la revendication 1, dans lequel
le siège (13) comprend une partie de siège enfourchée (13a) et une partie de dossier (13e); et
le matériau de rembourrage correspond à un matériau de rembourrage de la partie de dossier (13e).

3. Véhicule à selle (1) selon la revendication 1 ou 2, comprenant par ailleurs:
une poignée de passager (17) fixée au châssis de siège (4), où
l'antenne (20) est disposée au-dessus de la poignée de passager (17).

4. Véhicule à selle (1) selon l'une quelconque des revendications 1 à 3, dans lequel
l'antenne (20) est configurée pour fonctionner dans une bande de fréquences présentant une fréquence centrale de 760 MHz.

5. Véhicule à selle (1) selon l'une quelconque des revendications 1 à 4, dans lequel
l'antenne (20) est une antenne monopôle, une antenne fouet, une antenne colinéaire et une antenne de Brown.
